# FASCICULE DE BREVET EUROPEEN

(11) **EP 2 851 116 B1**
(45) Date de publication et mention de la délivrance du brevet: **15.01.2020**
(21) Numéro de dépôt: 14186024.7
(22) Date de dépôt: 23.09.2014
(51) Int. Cl.: B01D 53/86, B01D 53/90, B01D 53/96

(54) **Procédé d'épuration de fumées contenant des oxydes d'azote par voie catalytique**
Verfahren zur katalytischen Reinigung von Rauchgasen, die Stickoxide enthalten
Method for catalytic cleaning of gases containing nitrogen oxides

(30) Priorité: 24.09.2013 FR 1359151; 16.10.2013 FR 1360063
(43) Date de publication de la demande: 25.03.2015
(73) Titulaire: LAB SA, 69007 Lyon (FR)
(72) Inventeur: Siret, Bernard, 69200 VENISSIEUX (FR); Tabaries, Franck, 83430 SAINT MANDRIER SUR MER (FR)
(74) Mandataire: Lavoix

(56) Documents cités:
- EP-A1- 0 441 111
- EP-A1- 2 465 598
- EP-A2- 0 385 958
- EP-A2- 2 151 272
- DE-A1- 4 209 166
- DE-A1- 19 612 240
- US-A- 4 572 903

## Description

La présente invention concerne un procédé pour l'épuration de fumées contenant des oxydes d'azote par voie catalytique.

La combustion, en particulier la combustion de déchets ménagers ou de combustibles tels que le charbon ou le fioul, produit des oxydes d'azote. Ces gaz sont délétères, en étant responsables pour partie des pluies acides et ayant un effet très néfaste sur l'environnement et la santé. Aussi, les teneurs en oxydes d'azote sont sujettes à des réglementations strictes et on ne peut plus, sauf cas très particuliers, rejeter à l'atmosphère des fumées non traitées.

Trois procédés principaux peuvent être employés pour éliminer les oxydes d'azote dans des fumées. On peut tout d'abord agir au niveau du processus de la combustion à l'origine des fumées, soit en utilisant des brûleurs dit « bas-NOx », soit en créant localement ou globalement des conditions de combustion telles que la formation d'oxydes d'azote est amoindrie. Par exemple, on peut étager des appoints d'air ou bien diminuer la concentration en azote, précurseur potentiel des oxydes d'azote, par des recyclages ou un enrichissement artificiel en oxygène. Ces approches sont très couteuses, notamment l'enrichissement en oxygène, ou bien ne suffisent pas pour atteindre les concentrations actuellement requises, soit d'un point de vue réglementaire, soit pour faire accepter l'implantation de nouvelles usines aux riverains.

On peut aussi injecter un réactif qui va réagir avec les radicaux de combustion dans une zone particulière de la combustion à l'origine des fumées, de façon à minimiser la formation des oxydes d'azote. Un tel procédé, dit SNCR (anagramme de l'expression anglaise « Selective Non Catalytic Reduction »), utilise des réactifs comme l'urée ou l'ammoniac. Là encore, ces procédés suffisent de moins en moins pour atteindre les niveaux de réduction des oxydes d'azote souhaités et ne peuvent, au prix d'effets secondaires indésirables, dépasser 60 % de rendement de dénitrification.

Aussi, le procédé de choix maintenant utilisé est la dénitrification par voie catalytique, dite SCR (anagramme de l'expression anglaise « Selective Catalytic Réduction »), dans laquelle on fait passer les fumées à traiter sur un catalyseur maintenu à une température suffisante, usuellement comprise entre 180°C et 350°C selon les applications, après avoir ajouté aux fumées à dénitrifier un réactif de dénitrification, typiquement de l'ammoniac ou de l'urée. Ces installations et procédés sont performants, puisque les rendements de dénitrification dépassent 90%, mais sont coûteux en place et en investissement. Le réactif de dénitrification doit être distribué de manière homogène dans la gaine de circulation des fumées à traiter ou sur le catalyseur, ce qui oblige à prévoir un nombre de points d'injection important. Ainsi, DE-A-4209166, qui peut être considéré comme l'état de la technique le plus proche de l'objet de la revendication 1 annexée, divulgue un procédé de dénitrification de fumées de combustion, dans lequel les fumées à traiter traversent successivement un séparateur gaz-solides et un réacteur de dénitrification catalytique. En amont du séparateur gaz-solides, les fumées sont d'abord mélangées avec un matériau catalytique sous forme broyée, provenant d'une source de matériau catalytique frais et/ou d'une recirculation d'une partie des résidus solides qui sont collectés par le séparateur gaz-solides, puis mélangées avec un réactif de dénitrification, qui est de l'ammoniac ou de l'urée. L'introduction, dans les fumées, du matériau catalytique sous forme broyée et celle du réactif de dénitrification sont assurées par des dispositifs ad hoc respectifs, typiquement des dispositifs d'injection ou de dispersion : dans tous les cas, le temps de passage des composants mélangés dans l'un et/ou l'autre de ces dispositifs d'introduction est très court, typiquement compris entre une et dix secondes, ce qui est notoirement insuffisant pour y réaliser, avec un avancement significatif, des réactions avec les solides et une décomposition de l'urée.

Plus généralement, on notera que, dans le cas où on utilise de l'ammoniac, soit un stockage d'ammoniac liquéfié est nécessaire pour les plus grosses installations, ce qui crée des contraintes de sécurité supplémentaires, soit une solution d'ammoniac dans l'eau doit être vaporisée, ce qui induit des contraintes et des surcoûts liés à l'évaporation, ainsi que des risques de nature procédé puisqu'à aucun prix, des gouttes liquides ne doivent atteindre une paroi, sous peine d'encrassement rédhibitoire.

Quant à l'utilisation d'urée sous forme d'une solution aqueuse, elle a été proposée : en particulier, elle est utilisée pour les véhicules roulants, mais l'évaporation des gouttes de la solution tend à laisser des résidus de produits de polymérisation ou de condensation, tels que le biuret (NH₂CONHCONH₂), l'acide cyanurique et les composés voisins de l'ammeline (C₃N₃O₃H₃), qui vont finir par créer des dépôts solides dans les gaines ou bien qui vont se déposer sur le catalyseur, en réduisant son efficacité apparente. De son côté, EP-A-2 011 559 a proposé d'utiliser efficacement une solution d'urée, en jouant sur les temps de séjour des fumées, mélangées à cette solution, dans l'installation d'épuration de ces fumées par voie catalytique.

Les documents EP-A-2151272, EP-A-2465598 et DE-A-19612240 divulguent d'ultérieurs procédés de l'art antérieur.

Enfin, en plus des considérations qui précèdent, il faut garder à l'esprit que la dénitrification de fumées n'est pratiquement jamais opérée seule, puisque d'autres polluants présents dans les fumées, comme des poussières, de l'acide chlorhydrique et des oxydes de soufre, doivent aussi être éliminés, le plus souvent pour des raisons réglementaires. Aussi, l'installation d'épuration des fumées devient complexe, entre ce qui est nécessaire pour le dépoussiérage de ces fumées, pour l'élimination de leurs polluants acides et pour l'élimination de leurs oxydes d'azote.

Le but de la présente invention est de proposer un procédé intégré et global d'élimination des polluants contenus dans des fumées de combustion, qui est économique et performant.

A cet effet, l'invention a pour objet un procédé d'épuration de fumées contenant des oxydes d'azote, tel que défini à la revendication 1.

Ainsi, selon l'invention, de l'urée en tant que réactif destinée à la dénitrification par voie catalytique, est amenée, le cas échéant sous forme solide, à un réacteur d'activation, servant à la fois à la décomposition partielle de cette urée et à la réactivation de résidus solides collectés par un séparateur gaz-solides traitant les fumées à épurer, la décomposition de l'urée produisant alors pour partie des espèces réactives qui, par recirculation dans les fumées à traiter du flux sortant du réacteur d'activation, seront utilisées par un réacteur de dénitrification SCR situé en aval. Selon une des caractéristiques de l'invention, une introduction d'eau, notamment sous forme de vapeur d'eau ou de liquide ou bien d'un flux gazeux contenant au moins 20% d'eau en volume, est effectuée de façon à promouvoir la décomposition et la volatilisation de l'urée au niveau du réacteur d'activation. Selon une autre caractéristique de l'invention, les fumées à épurer, après, d'une part, avoir traversé le séparateur gaz-solides, destiné à capter les poussières et les gaz acides contenus dans ces fumées, et, d'autre part, s'être chargées des espèces réactives générées par le réacteur d'activation précité, traversent le réacteur de dénitrification SCR, ce dernier étant connu en soi.

La décomposition de l'urée, qui est effectuée surtout dans le réacteur d'activation, mais qui se poursuit aussi dans les gaines et les équipements situés en aval de ce réacteur d'activation, induit principalement les deux réactions suivantes :

NH₂CONH₂ (+ H₂O) → NH₃ + HNCO,

et

HNCO + H₂O → NH₃ + CO₂.

La première réaction est endothermique et est favorisée par un milieu chaud et humide, notamment tel que le milieu régnant dans le réacteur d'activation, comme évoqué un peu plus bas. La seconde réaction, consécutive à la première réaction, se poursuit dans les gaines ainsi que sur le catalyseur du réacteur de dénitrification SCR. Il faut noter que ces deux réactions sont assez lentes, si bien que, dans l'hypothèse où leur mise en œuvre devrait avoir lieu uniquement dans les gaines, cela obligerait à des temps de séjour particulièrement importants pour obtenir un avancement suffisant de ces réactions. A contrario, en se produisant dans le réacteur d'activation, dans lequel le temps de passage des solides excède cinq minutes, et en tenant compte du fait que le temps de séjour global des solides au sein de l'installation de mise en œuvre du procédé conforme à l'invention excède cinq heures en moyenne en raison de la recirculation de ces solides, ces deux réactions ont tout le temps de se produire.

Dans le réacteur d'activation, des conditions particulièrement favorables à la décomposition de l'urée, décomposition qui va fournir les espèces actives pour le catalyseur de dénitrification, parmi lesquelles l'ammoniac NH₃, l'acide isocyanique HNCO et l'urée sous forme vapeur, existent, la température y étant avantageusement d'au moins 110°C et l'humidité dans la phase gazeuse du réacteur d'activation étant avantageusement d'au moins 20% en volume. Egalement à titre avantageux, un flux gazeux sort en permanence du réacteur d'activation, qui contribue à la diffusion et à la dispersion des espèces réactives, en évitant une saturation locale.

En outre, le réacteur d'activation, qui est conçu pour, en son sein, mettre en contact des solides, en l'occurrence les résidus recirculés, avec de l'eau sous forme de vapeur, n'est pas gêné par la formation éventuelle de polymères solides qui, autrement, viendraient soit encrasser les gaines aval, soit désactiver le catalyseur de dénitrification. Grâce à l'invention, dans le cas où de tels produits solides, qui ont une très basse pression de vapeur, viennent à se former, ils sont évacués avec la purge naturelle de résidus solides de l'installation, c'est-à-dire via le flux de résidus du séparateur gaz-solides, qui est évacué de l'installation de mise en œuvre du procédé conforme à l'invention.

Un avantage supplémentaire de l'invention par rapport à l'utilisation d'ammoniac comme réactif de dénitrification catalytique est que l'urée produit des espèces intermédiaires, très réactives sur un catalyseur de dénitrification SCR, comme par exemple l'acide isocyanique HNCO. En effet, localement, sur le catalyseur de dénitrification, et donc à l'endroit où on en a vraiment besoin, la décomposition finale de ces espèces intermédiaires vers l'ammoniac, qui est l'espèce effectivement utilisée par le catalyseur, a lieu. Autrement dit, l'ammoniac est partiellement généré localement, sur le catalyseur de dénitrification, la où on en a besoin aux fins de la dénitrification catalytique. De plus, le fait que cet ammoniac soit généré localement et non pas en amont du réacteur de dénitrification réduit les problèmes liés à la formation de sels, comme NH₄Cl et NH₄HSO₄, sels dont l'influence néfaste pour les catalyseurs est connue.

Un mode de réalisation spécifique de l'invention est défini à la revendication 2. Dans ce mode de réalisation, de l'urée en tant que réactif destinée à la dénitrification est amenée, pour partie, à une zone chaude de l'unité de combustion à l'origine des fumées et, pour une autre partie, au réacteur d'activation : la partie de l'urée, introduite dans l'unité de combustion, a pour but de réaliser une dénitrification partielle des fumées de combustion, par voie non catalytique (SNCR), tandis que la partie de l'urée, envoyée au réacteur d'activation, a pour finalité d'être utilisée pour dénitrifier les fumées par voie catalytique (SCR), ce réacteur d'activation servant à la fois à la décomposition partielle de cette urée et à la réactivation des résidus solides collectés par le séparateur gaz-solides. 40 à 70% de l'urée amenée au total sont introduits dans l'unité de combustion : de cette façon, la dénitrification SNCR permet d'atteindre un taux de réduction des oxydes d'azote compris entre 30 et 65% dans les fumées envoyées au séparateur gaz-solides, comparativement à une situation où une telle injection d'urée dans l'unité de combustion serait absente.

Des caractéristiques additionnelles avantageuses du procédé conforme à l'invention, sont spécifiées aux revendications dépendantes 3 et suivantes.

L'invention sera mieux comprise à la lecture de la description qui va suivre, donnée uniquement à titre d'exemple et faite en se référant aux dessins sur lesquels :
- la figure 1 est un schéma d'une installation de mise en œuvre d'un premier mode de réalisation du procédé conforme à l'invention, et
- la figure 2 est une vue similaire à la figure 1 pour un second mode de réalisation du procédé conforme à l'invention.

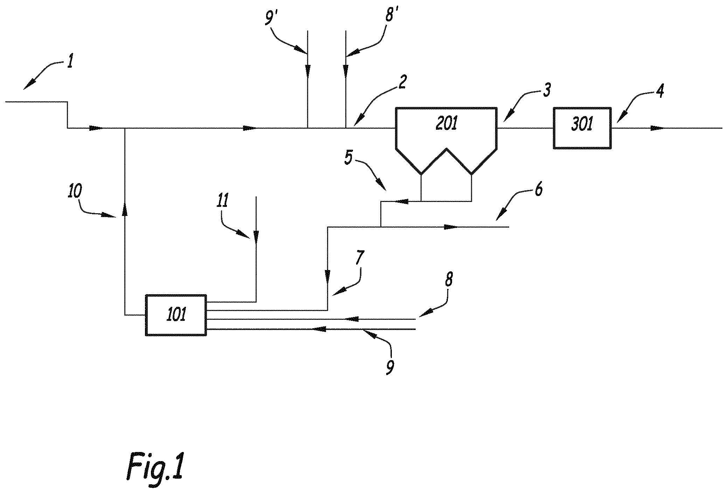

Comme représenté sur la figure 1, des fumées de combustion 1 traversent un séparateur gaz-solides 201, après avoir reçu des réactifs primaires pour leur dénitrification et pour l'élimination des gaz d'acides qu'elles contiennent, comme HCI et SO₂. Le séparateur gaz-solides 201, par exemple et de manière préférée un filtre à manches, assure la double fonction d'unité de dépoussiérage, visant à collecter les particules solides contenues dans les fumées 2 entrant dans ce séparateur, et de réacteur d'élimination des gaz acides contenus dans ces fumées, tels que HCI et SO₂.

Le réactif utilisé pour l'élimination des composés acides est un réactif alcalin, par exemple de la chaux hydratée, de la chaux vive, de la magnésie ou du bicarbonate de sodium, sans que cette liste ne soit limitative. Le réactif utilisé pour la dénitrification est de l'urée.

Ces deux réactifs sont introduits dans les fumées 1 dans la veine gazeuse de ces fumées, soit par un flux 8' de réactifs frais, soit par un flux 10 sortant d'un réacteur d'activation 101, qui sera décrit plus loin et dans lequel est introduit un flux 8 de réactifs frais. Sur la figure 1, une seule introduction est mentionnée au niveau du flux 8 ou du flux 8', mais chacun des réactifs de chaque flux 8, 8' peut être introduit séparément, c'est-à-dire que le flux 8 ou le flux 8' ou bien les deux flux 8 et 8' sont chacun constitués physiquement par deux introductions distinctes, l'une pour le réactif alcalin et l'autre pour l'urée. De même, à titre de variante, les deux flux 8 et 8' peuvent coexister, ou bien un seul de ces deux flux 8 et 8' peut être prévu.

Les fumées 3 sortant du séparateur gaz-solides 201, qui contiennent encore des oxydes d'azote mais, à la fois, moins de 100 mg/Nm³, de préférence moins de 50 mg/Nm³, secs de SO₂ et moins de 20 mg/Nm³, de préférence moins de 10 mg/Nm³, secs de HCI, sont introduites dans un réacteur de dénitrification catalytique 301, qui est d'une technologie connue en soi et qui est couramment appelée réacteur SCR. A titre d'exemple, le réacteur de dénitrification 301 contient un catalyseur structuré sur base TiO₂ et contenant des oxydes de vanadium et de tungstène. Ce réacteur de dénitrification 301 opère typiquement à une température comprise entre 130 et 220°C.

Les fumées 4, sortant du réacteur de dénitrification 301 et qui sont débarrassées pour la plus grande part de leurs polluants, sont rejetées à l'atmosphère ou bien subissent un traitement complémentaire aval, non représenté sur la figure 1. Un ventilateur de tirage, non représenté sur la figure 1, est par exemple utilisé à cet effet.

De manière optionnelle, un catalyseur, distinct de celui utilisé dans le réacteur de dénitrification 301, est utilisé, en étant introduit dans les fumées à traiter 1 dans la veine gazeuse de ces fumées, soit par un flux de catalyseur frais 9', soit par le flux 10 sortant du réacteur d'activation 101 dans lequel est introduit un flux de catalyseur frais 9. Le catalyseur du flux 9 ou du flux 9' présente une forme divisée et peut être constitué par exemple d'oxydes métalliques et/ou de charbon activé, étant remarqué qu'on entend par « divisé » un solide dont le diamètre moyen des particules est inférieur à 3 mm. Accessoirement et selon une caractéristique additionnelle de l'invention, une réaction de dénitrification partielle peut alors avoir lieu dans le séparateur gaz-solides 201, le flux 10 pouvant avoir une activité catalytique.

Comme représenté sur la figure 1, les résidus solides captés par le séparateur gaz-solides 201 sont collectés sous forme d'un flux 5, dont une partie minoritaire 6 est évacuée tandis qu'une partie majoritaire 7 de ces résidus collectés 5 est introduite dans le réacteur d'activation 101. La partie minoritaire 6 des résidus collectés 5 représente moins de 20% en masse du flux total 5. Les résidus collectés 5 contiennent en particulier, à la fois, les poussières et cendres présentent dans les fumées à traiter 1, le réactif alcalin destiné à l'élimination des polluants acides qui n'a pas réagi, les sels résultant de la réaction entre les polluants précités et le réactif alcalin, ainsi que l'urée qui n'a pas réagi et les éventuels sous produits solides de cette urée. Par exemple, pour le cas où les fumées 1 sont des fumées d'incinération et que les réactifs du flux 8 ou du flux 8' sont la chaux et l'urée, le flux 5 contient des cendres volantes, de la chaux n'ayant pas réagi, du chlorure et de l'oxychlorure de calcium (CaCl₂ et CaClOH), du sulfate et du sulfite de calcium, de l'eau de cristallisation de ces sels, ainsi que de l'urée et les produits de décomposition solides de cette urée. Bien entendu, dans le cas où un catalyseur est utilisé par l'intermédiaire du flux 9 ou du flux 9', ce catalyseur est également présent dans le flux de résidus collectés 5.

Dans le réacteur d'activation 101, de l'eau est également introduite par un flux 11, de préférence sous forme de vapeur. De manière préférée, on emploie de la vapeur d'eau, à une température de 5 à 40°C au dessus du point d'ébullition de l'eau à la pression du flux 11 (vapeur surchauffée). Il est toutefois possible d'utiliser pour le flux 11 un flux gazeux contenant de l'eau ainsi que de l'air ou de l'azote, si ce flux gazeux contient au moins 20% d'eau, voire un flux d'eau liquide qui sera vaporisée dans le réacteur d'activation 101.

Dans le cas où l'urée du flux 8 est une solution d'urée, une possibilité de mise en œuvre, non limitative, consiste à ce qu'au moins une partie de l'eau du flux 11 est amenée par la solution du flux 8.

La température des solides dans le réacteur d'activation 101 est comprise entre 110 et 180°C, de préférence entre 120 et 140°C. A ette température et avec l'humidité d'au moins 20% en volume dans la phase gazeuse à l'intérieur du réacteur d'activation 101, l'urée provenant du flux 8 ou du flux 8' se mélange aux autres solides introduits dans le réacteur d'activation 101 et, compte tenu du temps de passage des solides dans ce réacteur d'activation, ce temps de passage excédant deux, voire cinq minutes, l'urée se décompose et se volatilise aussi partiellement, générant des espèces réactives dans le flux 10 sortant du réacteur d'activation, en particulier de l'acide isocyanique et de l'ammoniac, qui serviront pour la dénitrification des fumées 1, notamment dans le réacteur de dénitrification 301. Les réactions de décomposition de l'urée se poursuivent aussi en aval du réacteur d'activation 101, par exemple sur les manches et dans les trémies dans le cas où le séparateur gaz-solides 201 est un filtre à manches, ce qui est la configuration préférée.

Le réacteur d'activation 101 assure une seconde fonction, à savoir la réactivation des solides recirculés, afin de mieux utiliser le réactif alcalin provenant du flux 8 ou du flux 8' et contenu dans les résidus collectés 5. Ceci minimise la consommation de ce réactif alcalin.

Les solides recirculés, constitués des résidus réactivés et des produits réactifs générés par la décomposition de l'urée en présence d'eau, forment le flux 10 qui est recyclé en amont du séparateur gaz-solides 201, en étant introduit dans les fumées à traiter 1. En pratique, le flux 10 peut être constitué par plusieurs canalisations. En particulier, ce flux 10 peut comprendre un évent pour les produits gazeux issus du réacteur d'activation 101, ces produits gazeux étant ainsi réintroduits, conjointement avec les solides du flux 10, en amont du séparateur gaz-solides 201.

En pratique, le réacteur d'activation 101 est d'une technologie connue en soi. Par exemple, ce réacteur 101 est constitué d'un réacteur à double vis.

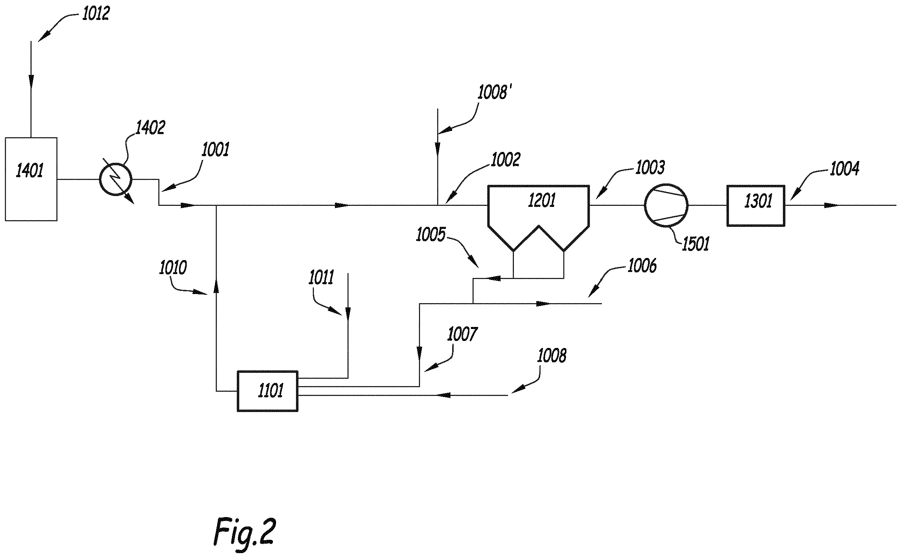

Dans le second mode de réalisation en lien avec la figure 2, des fumées de combustion 1001 sont issues d'une unité de combustion 1401, telle qu'un four, ainsi que, par exemple, de chaudières et économiseurs 1402 qui sont couramment prévus en aval d'une telle unité de combustion. Un flux d'urée 1012 est mélangé aux fumées à l'intérieur de l'unité de combustion 1401, en étant introduit dans l'unité de combustion, plus précisément dans une zone chaude de celle-ci où la température est comprise entre 750 et 1100 °C, de préférence entre 850 et 1100°C.

On comprend que l'urée amenée par le flux 1012 permet de réaliser une première dénitrification des fumées 1001, cette dénitrification étant partielle et étant de type SNCR, c'est-à-dire sélective et non catalytique, comme évoqué dans la partie introductive du présent document. De manière préférée, on règle la quantité d'urée introduite par le flux 1012 de façon à ce que la teneur des fumées 1001 en oxydes d'azote ne représente que 30 à 70% de la concentration qu'il y aurait en l'absence du flux 1012. Dans le cas d'une installation d'incinération de déchets ménagers ou mixtes, ceci signifie que la concentration en oxydes d'azote dans les fumées 1001 est comprise entre 100 et 250 mg/Nm³, exprimés sur base sèche, comme NO₂, et corrigés à 11% de O₂.

Les fumées issues des chaudières et économiseurs 1402 traversent un séparateur gaz-solides 1201, après avoir reçu des réactifs primaires autres que l'urée du flux précité 1012, à savoir des réactifs primaires pour, à la fois, l'élimination des gaz d'acides qu'elles contiennent, comme HCI et SO₂, et leur dénitrification catalytique, comme détaillé plus bas. Le séparateur gaz-solides 1201, par exemple et de manière préférée un filtre à manches, assure la double fonction d'unité de dépoussiérage, visant à collecter les particules solides contenues dans les fumées 1002 entrant dans ce séparateur, et de réacteur d'élimination des gaz acides contenus dans ces fumées, tels que HCI et SO₂.

Le réactif utilisé pour l'élimination des composés acides est un réactif alcalin, par exemple de la chaux hydratée, de la chaux vive, de la magnésie ou du bicarbonate de sodium, sans que cette liste ne soit limitative.

Le réactif utilisé pour la dénitrification catalytique est de l'urée, étant souligné que cette urée pour la dénitrification catalytique représente un apport additionnel distinct vis-à-vis de l'urée pour la dénitrification non catalytique, à savoir l'urée du flux précité 1012.

Ces deux réactifs, c'est-à-dire le réactif alcalin et l'urée autre que celle du flux 1012, sont introduits dans les fumées 1001 dans la veine gazeuse de ces fumées, soit par un flux 1008' de réactifs frais, soit par un flux 1010 sortant d'un réacteur d'activation 1101, qui sera décrit plus loin et dans lequel est introduit un flux 1008 de réactifs frais. Sur la figure 2, une seule introduction est mentionnée au niveau du flux 1008 ou du flux 1008', mais chacun des deux réactifs de chaque flux 1008, 1008' peut être introduit séparément, c'est-à-dire que le flux 1008 ou le flux 1008' ou bien les deux flux 1008 et 1008' sont chacun constitués physiquement par deux introductions distinctes, l'une pour le réactif alcalin et l'autre pour l'urée. De même, à titre de variante, les deux flux 1008 et 1008' peuvent coexister, ou bien un seul de ces deux flux 1008 et 1008' peut être prévu.

Dans tous les cas, selon une caractéristique de l'invention, l'urée amenée par le flux 1012 représente entre 40 et 70% de la quantité totale d'urée, apportée de manière cumulée par le flux 1012 et par les flux 1008 et/ou 1008'.

Suivant une disposition optionnelle avantageuse, un stockage commun, par exemple un silo si on emploie de l'urée solide ou bien un réservoir si on emploie une solution d'urée, peut être utilisé tant pour l'urée injectée par le flux 1012 que pour celle injectée par les flux 1008 et/ou 1008'.

Les fumées 1003 sortant du séparateur gaz-solides 1201, qui contiennent encore des oxydes d'azote mais, à la fois, moins de 100 mg/Nm³, de préférence moins de 50 mg/Nm³, secs de SO₂ et moins de 20 mg/Nm³, de préférence moins de 10 mg/Nm³, secs de HCI, sont introduites dans un réacteur de dénitrification catalytique 1301, qui est d'une technologie connue en soi et qui est couramment appelée réacteur SCR. Ce réacteur de dénitrification 1301 opère typiquement à une température comprise entre 130 et 220°C.

On notera que ces fumées 1003, qui ont été débarrassées de la majeure partie des polluants acides par le séparateur gaz-solides 1201, ne contiennent plus qu'une fraction des oxydes d'azote qu'il y aurait eus en l'absence d'introduction d'urée par le flux 1012. Mais également, ce qui est un avantage supplémentaire, les fumées 1003 contiennent aussi une fuite d'ammoniac résultant de la dénitrification non catalytique des fumées 1001 : cette fuite d'ammoniac est utilisée à profit par le réacteur 1301, qui va consommer cette fuite, en la transformant ainsi en un avantage alors qu'elle est préjugée comme une nuisance dans le cas d'une dénitrification non catalytique considérée isolément. De cette façon, la dénitrification partielle effectuée dans l'unité de combustion 1401 peut être plus poussée, par exemple au-delà de 50%, qu'elle ne le serait en l'absence du réacteur 1301 en aval, puisque, dans le cas d'une dénitrification non catalytique considérée isolément, une fuite d'ammoniac dépassant 10 mg/Nm³ est en général proscrite.

Les fumées 1004, sortant du réacteur de dénitrification 1301 et qui sont débarrassées pour la plus grande part de leurs polluants, sont rejetées à l'atmosphère ou bien subissent un traitement complémentaire aval, non représenté sur la figure 2. Un ventilateur de tirage 1501 est par exemple utilisé à cet effet. A titre d'aménagement optionnel avantageux, qui est mis en œuvre dans l'installation de la figure 2, ce ventilateur 1501 est situé entre le séparateur gaz-solides 1201 et le réacteur de dénitrification 1301 : du fait que ce ventilateur 1501 est intercalé sur le trajet des fumées entre le séparateur gaz-solides 1201 et le réacteur de dénitrification 1301, une élévation de température s'y produit si bien que la température à l'intérieur du réacteur 1301 est alors de 3 à 10° supérieure à celle des fumées 1003 sortant du séparateur gaz-solides, ce qui augmente la cinétique des réactions qui se déroulent le réacteur 1301 et ce qui permet de réduire encore plus le volume de catalyseur dans ce réacteur.

Accessoirement et selon une caractéristique additionnelle de l'invention, une réaction de dénitrification partielle peut alors avoir lieu dans le séparateur gaz-solides 1201, le flux 1010 pouvant avoir une activité intrinsèque de dénitrification.

Comme représenté sur la figure 2, les résidus solides captés par le séparateur gaz-solides 1201 sont collectés sous forme d'un flux 1005, dont une partie minoritaire 1006 est évacuée tandis qu'une partie majoritaire 1007 de ces résidus collectés 1005 est introduite dans le réacteur d'activation 1101. La partie minoritaire 1006 des résidus collectés 1005 représente moins de 20% en masse du flux total 1005. Les résidus collectés 1005 contiennent en particulier, à la fois, les poussières et cendres présentent dans les fumées à traiter 1001, le réactif alcalin destiné à l'élimination des polluants acides qui n'a pas réagi, les sels résultant de la réaction entre les polluants précités et le réactif alcalin, ainsi que l'urée qui n'a pas réagi et les éventuels sous produits solides de cette urée. Par exemple, pour le cas où les fumées 1001 sont des fumées d'incinération et que les réactifs du flux 1008 ou du flux 1008' sont la chaux et l'urée, le flux 1005 contient des cendres volantes, de la chaux n'ayant pas réagi, du chlorure et de l'oxychlorure de calcium (CaCl₂ et CaClOH), du sulfate et du sulfite de calcium, de l'eau associée à ces sels, ainsi que de l'urée et les produits de décomposition solides de cette urée.

Dans le réacteur d'activation 1101, de l'eau est également introduite par un flux 1011, de préférence sous forme de vapeur. De manière préférée, on emploie de la vapeur d'eau, à une température de 5 à 40°C au-dessus du point d'ébullition de l'eau à la pression du flux 1011 (vapeur surchauffée). Il est toutefois possible d'utiliser pour le flux 1011 un flux gazeux contenant de l'eau ainsi que de l'air ou de l'azote, si ce flux gazeux contient au moins 20% d'eau, voire un flux d'eau liquide qui sera vaporisée dans le réacteur d'activation 1101.

Dans le cas où l'urée du flux 1008 est une solution d'urée, une possibilité de mise en œuvre, non limitative, consiste à ce qu'au moins une partie de l'eau du flux 1011 est amenée par la solution du flux 1008.

La température des solides dans le réacteur d'activation 1101 est comprise entre 110 et 180°C, de préférence entre 120 et 140°C. A cette température et avec l'humidité d'au moins 20% en volume dans la phase gazeuse à l'intérieur du réacteur d'activation 1101, l'urée provenant du flux 1008 ou du flux 1008' se mélange aux autres solides introduits dans le réacteur d'activation 1101 et, compte tenu du temps de passage des solides dans ce réacteur d'activation, ce temps excédant deux, voire cinq minutes, l'urée se décompose et se volatilise aussi partiellement, générant des espèces réactives dans le flux 1010 sortant du réacteur d'activation, en particulier de l'acide isocyanique et de l'ammoniac, qui serviront pour la dénitrification des fumées 1001, notamment dans le réacteur de dénitrification 1301. Les réactions de décomposition de l'urée se poursuivent aussi en aval du réacteur d'activation 1101, par exemple sur les manches et dans les trémies dans le cas où le séparateur gaz-solides 1201 est un filtre à manches, ce qui est la configuration préférée.

Le réacteur d'activation 1101 assure une seconde fonction, à savoir la réactivation des solides recirculés, afin de mieux utiliser le réactif alcalin provenant du flux 1008 ou du flux 1008' et contenu dans les résidus collectés 1005. Ceci minimise la consommation de ce réactif alcalin.

Les solides recirculés, constitués des résidus réactivés et des produits réactifs générés par la décomposition de l'urée en présence d'eau, forment le flux 1010 qui est recyclé en amont du séparateur gaz-solides 1201, en étant introduit dans les fumées à traiter 1001. En pratique, le flux 1010 peut être constitué par plusieurs canalisations. En particulier, ce flux 1010 peut comprendre un évent pour les produits gazeux issus du réacteur d'activation 1101, ces produits gazeux étant ainsi réintroduits, conjointement avec les solides du flux 1010, en amont du séparateur gaz-solides 1201.

En pratique, le réacteur d'activation 1101 est d'une technologie connue en soi. Par exemple, ce réacteur 1101 est constitué d'un réacteur à double vis.

En tenant compte des explications qui précèdent, on comprend que les avantages apportés par l'invention sont nombreux :
- l'invention permet d'utiliser un ensemble d'équipements simples et compacts, la nécessité de pulvériser une solution d'urée ou d'ammoniaque de manière homogène disparaissant ; ainsi, un réacteur unique, à savoir le réacteur 101 ou 1101, est utilisé pour la réactivation des résidus recirculés et pour la décomposition de l'urée ;
- de l'urée d'une qualité technique peut être utilisée, puisque le problème de constructions dans la gaine véhiculant les fumées est complètement supprimé ; ceci est un avantage économique important ;
- dans le cas où on utilise, dans le flux 8 ou dans les flux 1012 et/ou 1008, de l'urée sous forme solide, typiquement en grains, la mise en solution et la pulvérisation sont évitées par rapport à des solutions utilisant de l'urée en solution ;
- dans le cas où on utilise, dans le flux 1012, le flux 8 ou 1008 et/ou le flux 8' ou 1008', une solution d'urée, la pulvérisation est très simplifiée ;
- des espèces très réactives, telles que l'acide isocyanique HNCO, sont libérées et utilisées par le catalyseur du réacteur de dénitrification SCR 301 ou 1301, situé en aval du réacteur d'activation 101 ou 1101 ; le volume de catalyseur du réacteur 301 ou 1301 peut être moindre, toutes choses étant égales par ailleurs ; de même, spécifiquement pour le second mode de réalisation, dans la mesure où une dénitrification partielle est réalisée dans l'unité de combustion 1401 par le flux d'urée 1012, le volume de catalyseur requis dans le réacteur de dénitrification 1301 est moins de deux fois moindre, à température comparable, que pour une solution de dénitrification catalytique traditionnelle ;
- une partie de l'ammoniac étant libérée seulement au niveau du catalyseur du réacteur de dénitrification 301 ou 1301, les concentrations réelles en ammoniac sont plus faibles que dans un procédé de dénitrification SCR classique, ce qui minimise la formation des sels tels que NH₄Cl ou le bisulfate d'ammonium ; et
- de par leur recyclage, les solides ont un temps de séjour de plusieurs heures au sein de l'installation de mise en œuvre du procédé conforme à l'invention, ce qui assure une décomposition complète de l'urée, qui ne peut pas être obtenue par un unique passage dans les gaines seules.

## Revendications

1. Procédé d'épuration de fumées contenant des oxydes d'azote,
dans lequel les fumées à traiter (1 ; 1001), dans lesquelles un réactif alcalin est introduit pour en éliminer des composés acides, traversent successivement un séparateur gaz-solides (201 ; 1201) et un réacteur de dénitrification catalytique (301 ; 1301), et
dans lequel au moins 80% en masse des résidus solides (5 ; 1005) collectés par le séparateur gaz-solides (201 ; 1201) sont envoyés vers un réacteur d'activation (101 ; 1101) :
- duquel sort un flux (10 ; 1010) qui est recyclé dans les fumées à traiter (1 ; 1001) en amont du séparateur gaz-solides,
- auquel sont également envoyés un premier flux d'urée et un flux (11 ; 1011) contenant de l'eau, et
- dans lequel, à la fois, le réactif alcalin contenu dans les résidus solides y passant est réactivé et l'urée est au moins partiellement décomposée en générant des espèces réactives qui sont utilisées par le réacteur de dénitrification (301 ; 1301).

2. Procédé selon la revendication 1, dans lequel les fumées traversant le séparateur gaz-solides (1201) et le réacteur de dénitrification (1301) sont issues d'une unité de combustion (1401), un second flux d'urée (1012) étant introduit dans une zone de l'unité de combustion, ayant une température comprise entre 750 et 1100° C, de préférence entre 850 et 1100° C, ce second flux d'urée (1012) représentant 40 à 70 % de la quantité totale d'urée apportée par les premier et second flux d'urée.

3. Procédé selon la revendication 2, dans lequel l'urée du premier flux d'urée et l'urée du second flux d'urée (1012) proviennent d'un stockage commun.

4. Procédé selon l'une des revendications 2 ou 3, dans lequel l'urée du second flux d'urée (1012) est sous forme solide.

5. Procédé selon l'une quelconque des revendications précédentes, dans lequel le temps de passage des solides dans le réacteur d'activation (101 ; 1101) excède deux minutes.

6. Procédé selon l'une quelconque des revendications précédentes, dans lequel le temps de passage des solides dans le réacteur d'activation (101 ; 1101) excède cinq minutes.

7. Procédé selon l'une quelconque des revendications précédentes, dans lequel le flux (11 ; 1011) contenant de l'eau est constitué par de la vapeur vive, surchauffée de 5 à 40°C.

8. Procédé selon l'une quelconque des revendications précédentes, dans lequel la température des solides dans le réacteur d'activation (101 ; 1101) est comprise entre 110 et 180°C, de préférence entre 120 et 140°C.

9. Procédé selon l'une quelconque des revendications précédentes, dans lequel l'humidité dans la phase gazeuse du réacteur d'activation (101 ; 1101) est d'au moins 20% en volume.

10. Procédé selon l'une quelconque des revendications précédentes, dans lequel au moins une partie de l'urée du premier flux d'urée est de l'urée fraîche, introduite dans le réacteur d'activation (101 : 1101).

11. Procédé selon la revendication 10, dans lequel l'urée fraîche du premier flux d'urée est sous forme solide.

12. Procédé selon l'une quelconque des revendications précédentes, dans lequel au moins une partie de l'urée du premier flux d'urée provient d'urée fraîche, introduite dans les fumées à traiter (1 ; 1001) en amont du séparateur gaz-solides (201 ; 1201).

13. Procédé selon l'une quelconque des revendications précédentes, dans lequel le flux (10 ; 1010) sortant du réacteur d'activation (101 ; 1101) et recyclé dans les fumées à traiter (1 ; 1001) en amont du séparateur gaz-solides (201 ; 1201) inclut des produits à la fois solides et gazeux, issus de la décomposition de l'urée dans le réacteur d'activation (101 ; 1101).

14. Procédé selon l'une quelconque des revendications précédentes, dans lequel un ventilateur de tirage (1501) est intercalé entre le séparateur gaz-solides (1201) et le réacteur de dénitrification (1301).

15. Procédé selon l'une quelconque des revendications précédentes, dans lequel un catalyseur frais sous forme divisée (9 ; 9') est également introduit dans les fumées à traiter (1) en amont du séparateur gaz-solides (201) et/ou dans le réacteur d'activation (101).

## Patentansprüche

1. Verfahren zum Reinigen von Abgasen, die Stickoxide enthalten, wobei die zu behandelnden Abgase (1; 1001), in die ein alkalisches Reagens eingeleitet wird, um daraus saure Komponenten zu beseitigen, nacheinander einen Gas/Feststoff-Abscheider (201; 1201) und einen katalytischen Nitratentfernungsreaktor (301; 1301) durchlaufen und in dem wenigstens 80 Massen-% an Feststoffresten (5; 1005), die durch den Gas/Feststoff-Abscheider (201; 1201) gesammelt werden, zu einem Aktivierungsreaktor (101; 1101) geschickt werden:
- aus dem ein Fluss (10; 1010) austritt, der stromaufseitig des Gas/Feststoff-Abscheiders wieder in die zu behandelnden Abgase (1; 1001) eingeleitet wird,
- in den außerdem ein erster Harnstofffluss und ein Fluss (11; 1011), der Wasser enthält, geschickt werden und
- in dem das alkalische Reagens, das in den sich durch ihn bewegenden Feststoffresten enthalten ist, reaktiviert wird und der Harnstoff wenigstens teilweise zerlegt wird, indem reaktive Sorten erzeugt werden, die von dem Nitratentfernungsreaktor (301; 1301) verwendet werden.

2. Verfahren nach Anspruch 1, wobei die Abgase, die durch den Gas/Feststoff-Abscheider (1201) und durch den Nitratentfernungsreaktor (1301) verlaufen, von einer Verbrennungseinheit (1401) stammen, wobei ein zweiter Harnstofffluss (1012) in eine Zone der Verbrennungseinheit eingeleitet wird, die eine Temperatur im Bereich von 750 bis 1100 °C, vorzugsweise von 850 bis 1100 °C, besitzt, wobei dieser zweite Harnstofffluss (1012) 40 bis 70 % der Gesamtmenge an Harnstoff, die durch den ersten und den zweiten Harnstofffluss eingebracht wird, darstellt.

3. Verfahren nach Anspruch 2, wobei der Harnstoff des ersten Harnstoffflusses und der Harnstoff des zweiten Harnstoffflusses (1012) von einem gemeinsamen Vorratsbehälter stammen.

4. Verfahren nach einem der Ansprüche 2 oder 3, wobei der Harnstoff des zweiten Harnstoffflusses (1012) in fester Form vorliegt.

5. Verfahren nach einem der vorhergehenden Ansprüche, wobei die Durchlaufzeit der Feststoffe in dem Aktivierungsreaktor (101; 1101) zwei Minuten übersteigt.

6. Verfahren nach einem der vorhergehenden Ansprüche, wobei die Durchlaufzeit der Feststoffe in dem Aktivierungsreaktor (101; 1101) fünf Minuten übersteigt.

7. Verfahren nach einem der vorhergehenden Ansprüche, wobei der Fluss (11; 1011), der Wasser enthält, durch Frischdampf, der um 5 bis 40 °C überhitzt ist, gebildet ist.

8. Verfahren nach einem der vorhergehenden Ansprüche, wobei die Temperatur der Feststoffe in dem Aktivierungsreaktor (101; 1101) im Bereich von 110 bis 180 °C, vorzugsweise von 120 bis 140 °C, liegt.

9. Verfahren nach einem der vorhergehenden Ansprüche, wobei die Feuchtigkeit in der Gasphase des Aktivierungsreaktors (101; 1101) wenigstens 20 Vol.-% beträgt.

10. Verfahren nach einem der vorhergehenden Ansprüche, wobei wenigstens ein Teil des Harnstoff des ersten Harnstoffflusses frischer Harnstoff ist, der in den Aktivierungsreaktor (101; 1101) eingeleitet wird.

11. Verfahren nach Anspruch 10, wobei der frische Harnstoff des ersten Harnstoffflusses in fester Form vorliegt.

12. Verfahren nach einem der vorhergehenden Ansprüche, wobei wenigstens ein Teil des Harnstoffs des ersten Harnstoffflusses von frischem Harnstoff stammt und in die zu behandelnden Abgase (1; 1001) stromaufseitig des Gas/Feststoff-Abscheiders (201; 1201) eingeleitet werden.

13. Verfahren nach einem der vorhergehenden Ansprüche, wobei der Fluss (10; 1010), der aus dem Aktivierungsreaktor (101; 1101) austritt und in die zu behandelnden Abgase (1; 1001) stromaufseitig des Gas/Feststoff-Abscheiders (201; 1201) eingeleitet wird, sowohl feste als auch gasförmige Produkte enthält, die aus der Zerlegung von Harnstoff in dem Aktivierungsreaktor (101; 1101) stammen.

14. Verfahren nach einem der vorhergehenden Ansprüche, wobei zwischen den Gas/Feststoff-Abscheider (1201) und den Nitratentfernungsreaktor (1301) ein Abzuggebläse (1501) eingefügt ist.

15. Verfahren nach einem der vorhergehenden Ansprüche, wobei ein frischer Katalysator (9; 9') in unterteilter Form ebenfalls in die zu behandelnden Abgase (1) stromaufseitig des Gas/Feststoff-Abscheiders (201) und/oder in den Aktivierungsreaktor (101) eingeleitet wird.

## Claims

1. Method for cleaning fumes containing nitrogen oxides,
wherein the fumes to be treated (1; 1001), into which an alkaline reagent is introduced in order to remove acidic compounds therefrom, pass in succession through a gas-solid separator (201; 1201) and a catalytic denitrification reactor (301; 1301), and
wherein at least 80% by mass of the solid residues (5; 1005) collected by the gas-solid separator (201; 1201) are sent to an activation reactor (101; 1101):
- from which there leaves a stream (10; 1010) which is recycled into the fumes to be treated (1; 1001) upstream of the gas-solid separator,
- to which there are also sent a first stream of urea and a stream (11; 1011) containing water, and
- wherein, at the same time, the alkaline reagent contained in the solid residues passing therethrough is reactivated and the urea is at least partially decomposed to generate reactive species which are used by the denitrification reactor (301; 1301).

2. Method according to claim 1, wherein the fumes passing through the gas-solid separator (1201) and the denitrification reactor (1301) come from a combustion unit (1401), a second stream of urea (1012) being introduced into a zone of the combustion unit having a temperature of between 750 and 1100°C, preferably between 850 and 1100°C, the second stream of urea (1012) representing from 40 to 70% of the total quantity of urea supplied by the first and second streams of urea.

3. Method according to claim 2, wherein the urea of the first stream of urea and the urea of the second stream of urea (1012) come from a common store.

4. Method according to either claim 2 or claim 3, wherein the urea of the second stream of urea (1012) is in solid form.

5. Method according to any one of the preceding claims, wherein the passage time of the solids in the activation reactor (101; 1101) exceeds two minutes.

6. Method according to any one of the preceding claims, wherein the passage time of the solids in the activation reactor (101; 1101) exceeds five minutes.

7. Method according to any one of the preceding claims, wherein the stream (11; 1011) containing water is composed of live steam, superheated from 5 to 40°C.

8. Method according to any one of the preceding claims, wherein the temperature of the solids in the activation reactor (101; 1101) is between 110 and 180°C, preferably between 120 and 140°C.

9. Method according to any one of the preceding claims, wherein the humidity in the gas phase of the activation reactor (101; 1101) is at least 20% by volume.

10. Method according to any one of the preceding claims, wherein at least a portion of the urea of the first stream of urea is fresh urea, introduced into the activation reactor (101; 1101).

11. Method according to claim 10, wherein the fresh urea of the first stream of urea is in solid form.

12. Method according to any one of the preceding claims, wherein at least a portion of the urea of the first stream of urea comes from fresh urea, introduced into the fumes to be treated (1; 1001) upstream of the gas-solid separator (201; 1201).

13. Method according to any one of the preceding claims, wherein the stream (10; 1010) leaving the activation reactor (101; 1101) and recycled into the fumes to be treated (1; 1001) upstream of the gas-solid separator (201; 1201) includes products which are both solid and gaseous, obtained from the decomposition of the urea in the activation reactor (101; 1101).

14. Method according to any one of the preceding claims, wherein an extraction fan (1501) is interposed between the gas-solid separator (1201) and the denitrification reactor (1301).

15. Method according to any one of the preceding claims, wherein a fresh catalyst in divided form (9; 9') is also introduced into the fumes to be treated (1) upstream of the gas-solid separator (201) and/or into the activation reactor (101).
